(19) Europäisches Patentamt
European Patent Office
Office européen des brevets

(11) Publication number: 0 122 894
B1

(12) # EUROPEAN PATENT SPECIFICATION

(45) Date of publication of patent specification: 19.04.89

(51) Int. Cl.$^4$: **C 08 G 18/10**, C 08 G 18/38, C 09 D 3/72, C 09 J 3/16

(21) Application number: 84850085.6

(22) Date of filing: 14.03.84

(54) **Process for preparing polyurethanes with the use of a polyhydroxyalkylphosphine oxide as curative.**

(30) Priority: 17.03.83 US 476163
17.03.83 US 476001
17.03.83 US 476162

(43) Date of publication of application:
24.10.84 Bulletin 84/43

(45) Publication of the grant of the patent:
19.04.89 Bulletin 89/16

(84) Designated Contracting States:
BE CH DE FR GB IT LI NL SE

(56) References cited:
US-A-3 268 360

CHEMICAL ABSTRACTS, vol. 78, no. 18, 7th May 1973, page 53, no. 112481z, Columbus, Ohio, US; R.K. VALETDINOV et al.: "Properties of phosphorus-containing polyether urethane elastomers" & KAUCH. REZINA 1972, 31(11), 15-17

(73) Proprietor: FMC Corporation
2000 Market Street
Philadelphia Pennsylvania 19103 (US)

(72) Inventor: Lee, Fui-Tseng Huang
38 Wittmer Court
Princeton New Jersey 08540 (US)
Inventor: Green, Joseph
3 New Dover Drive
East Brunswick New Jersey 08816 (US)

(74) Representative: Halldin, Bo et al
Dr. Ludwig Brann Patentbyra AB Kungsgatan 3
P.O. Box 7524
S-103 92 Stockholm (SE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 122 894 B1

**Description**

This invention relates to a process for preparing polyurethanes, particularly to improved polyurethane products for use as coatings, elastomers and adhesives.

Polyurethanes comprise a well-known class of commercial polymers, the characteristic structural unit of which is the urethane linkage,

H
—N—C(O)O—.

Broadly, such polymers are produced by condensing a polyisocyanate with a multifunctional hydrogen donor such as an organic polyol, commonly a polyester or polyether having free hydroxy groups. Both cellular and solid forms of the polymer can be obtained, depending on the choice of reaction conditions. To produce cellular or, what is more familiarly referred to as polyurethane foam, the so-called "one shot" process is normally employed. In this procedure, all of the ingredients are combined simultaneously in the presence of a blowing agent and the resultant mixture transferred to a mold or form and allowed to foam up and solidify. Flexible foams are obtained by including as one of the components, a small quantity of water which hydrolyzes some of the isocyanate to generate carbon dioxide which acts as the blowing agent; rigid foams are produced using halogenated hydrocarbons as the blowing agent. Non-cellular polyurethanes are normally made without a blowing agent. In the "prepolymer" or two-component method of manufacturing non-cellular polyurethanes, the technique with which the invention is generally concerned, an excess of polyisocyanate is first reacted with the polyol to form an intermediate prepolymer. The latter is then contacted with an active hydrogen compound — commonly referred to as a curative — which reacts with residual NCO groups to engender a solid polyurethane system. Amines and hydroxy compounds are the usual curatives. An outline of polyurethane chemistry is set forth in the following scheme:

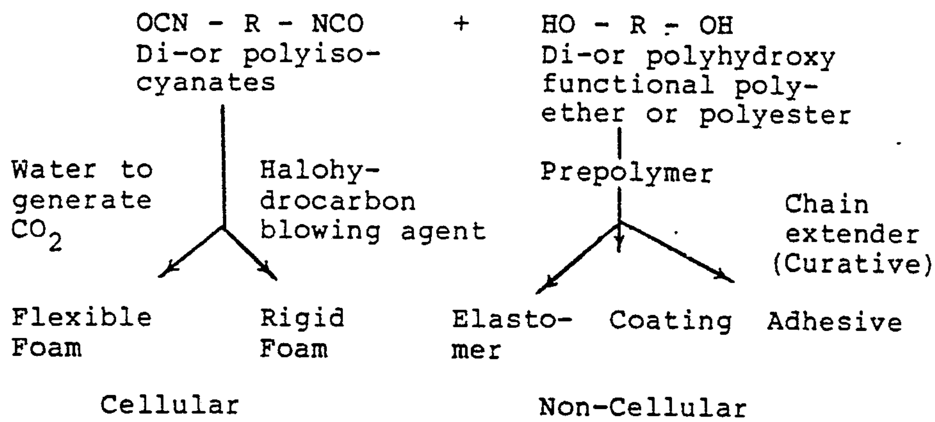


By varying R, for example, aliphatic or aromatic, the molecular and/or equivalent weight of the reactants, functionality of active hydrogen donors, for example, polyols and curatives as well as the nature of other minor though important ingredients such as catalysts, surfactants and the like, a large variety of products having widely differing properties can be realized.

EP—A—0 070 573 and Kauch. Rezina, 1972, 31(11) pages 15—17, disclose the production of flame retardant polyurethanes made with polyhydroxyalkylphosphine oxides as fire retardants which polyurethanes are prepared by means of the "one-shot" method. However, there is no mention in said publications of employing polyhydroxyphosphine oxides as curing agents for polyurethane prepolymers to form useful polymer products such as polyurethane elastomers, coatings and adhesives.

One important line of polyurethane products is known as elastomers. These are substantially linear polyurethanes having varying degrees of rubberlike properties. They are usually formed by reacting excess diisocyanate with linear long-chain polyols, such as a polyether or polyester, and curing the resulting NCO terminated prepolymer with a low molecular weight diamine, diol, triol of their admixtures.

In the manufacture of polyurethane elastomers made by the prepolymer or two-component method, one of the standard curatives for toluene diisocyanate (TDI) based prepolymers is MOCA, the acronym for the name of the difunctional amine 4,4'-methylene-bis(2-chloroaniline). However, because of possible carcinogenicity, the production and availability of MOCA has been considerably curtailed. Other amine curatives have been used such as Polacure 740M (trimethylene glycol di-p-amino benzoate).

It is also known to produce polyurethane elastomers using low molecular weight polyhydroxy compounds as curatives. An example of such curatives, particularly for commercial purposes, is a blend, by weight, of 6% trimethylolpropane (TMP) and 94% 1,4-butanediol (BD). Although generally satisfactory as a curative for MDI based prepolymers, (TMP) (BD) gives soft, very low strength elastomers with TDI prepolymers compared to corresponding MOCA cured polymers. Other curatives have been reported include mixtures of 1,4-butanediol and butynediol for RIM injection molded polyurethane elastomers and hydroquinone di-(beta hydroxyethyl) ether (HQEE) for sheet molded polyurethane elastomers (SMUC).

Curable adhesives are another valuable class of products which have been developed based on polyurethane resin technology. A curable polyurethane adhesive with which the present invention is particularly concerned, consists of a separate two-component system, one of which contains an NCO terminated prepolymer and the other of which is a low molecular weight aliphatic dihydroxy curative compound, 1,4-butanediol being commonly used. A trihydroxy compound, such as trimethylpropane (TMP), may also be included as a modifier but the quantity is normally rather small, lest excessive crosslinking occur.

A further valuable and important use of polyurethanes is in the manufacture of coatings. Although numerous formulations have been developed over the years, polyurethane coatings normally fall within the five general types which have been classified by the American Society for Testing Materials (ASTM). Except for ASTM Type I, all are derived by curing a reactive precursor material in the form of an NCO terminated prepolymer. The latter is formed by condensing an excess of a polyisocyanate with an organic polyol, commonly a polyester or polyether having free hydroxy groups; curing of the NCO terminated prepolymer is effected by reacting it with a hydrogen donor, for example, moisture, polyhydroxy compound or amine to give the final polymer product. ASTM Type II is a one-package moisture curable urethane prepolymer having a free NCO content of around 3 to 4%, at a non-volatile level of about 40 to 50%. The remaining isocyanate reacts with atmospheric moisture after it has been applied to give a film containing a large percentage of urea groups. ASTM Type III is a prepolymer having a high level of NCO which is tied up with phenol to prevent subsequent reaction at ambient temperature. This type of material is known as a blocked urethane and is extensively used in coatings which are baked after application. The phenol splits off at temperatures in excess of about 350°F, after which curing of the coating proceeds very rapidly owing to the vigorous reaction between the available NCO and the hydrogen donor which could not occur as long as the NCO was combined with the phenolic blocking agent. ASTM Type IV is a two-package urethane, one of which contains the NCO prepolymer, the other of which contains a highly reactive diamine plus other ingredients to promote flow, bubble release and other minor components. ASTM Type V is also a two-package formulation where the first component is the NCO prepolymer and the second component is a polyol.

Of the ASTM classified urethane, Type III is emerging as the most important in the coating field. It is a single-package, prepolymer system which provides many of the advantages of two-component urethanes while devoid of the mixing and proportioning problems associated with two-component materials. Blocked urethanes are moisture insensitive, stable over long periods, and generally easy to transport, use and handle, requiring only that they be protected from undue heat.

Although coatings must exhibit various chemical and physical properties, for example, resistance to marring, cracking, solvent attack, moisture penetration, discoloration, corrosion, U.V. breakdown; strength and hardness are also important. However, good adhesion to a substrate is perhaps the most fundamental requisite.

In accordance with the present invention, polyurethane compositions have been prepared embracing new classes of elastomers, adhesives and coatings which exhibit excellent chemical and physical properties.

The polyurethane elastomers are produced by curing an NCO terminated prepolymer derived from a polyhydroxy polyether or polyester or mixtures in which the curative contains a polyhydroxy alkylphosphine oxide of the formula:

$$(HO{-}R)_nP(R_1)_{3-n} \quad (\text{with } O \uparrow \text{ on } P)$$

wherein R is alkylene of 3 to 6 carbon atoms, $R_1$ is an alkyl of 2 to 10 carbon atoms or cycloalkyl of 6 to 12 carbon atoms and n is an integer of 2 or 3.

In general, polyurethane elastomers are prepared generally in the known manner except that the herein polyhydroxyalkylphosphine oxides are used in place of the prior art curatives. Typically, the NCO prepolymer and the curative are each degassed, mixed together and cured at about 80°C; post curing is usually at about 100°C.

The prepolymers employed in the practice of the invention are known chemical entities, the description and preparation of which are extensively documented in treatises dealing with urethane elastomer technology. Such intermediates are obtained by condensing an excess of an organic diisocyanate or polyisocyanate with various polyhydroxy-containing polyesters and polyethers. The percentage of NCO available in the resulting isocyanate terminated prepolymer will vary with the amount of excess isocyanate employed. Solvent-free prepolymers are commonly made up at an available NCO percentage of about 3% to 20%. In the well-known treatise "The Development and Use of Polyurethane Products" by E. N. Doyle (McGraw-Hill Book Company) at page 35, the characteristics of some prepolymers derived from polyfunctional polyethers and polyesters in which the diisocyanate is TDI are as follows:

1. TDI/polyester, with 2.5 equivalent weight excess TDI, with the polyester having an equivalent weight of 810 (lightly branched polyethylene succinate).

2. TDI/polyether, with 2.5 excess TDI, with the polyether having an equivalent weight of 325 (polyether diol).

3. TDI/polyether, with 2.5 TDI, with the polyether having an equivalent weight of 980 (polyoxypropylene triol).

4. TDI/polybutadiene homopolymer, with 3.0 excess TDI. The equivalent weight of the homopolymer is 1,150.

5. TDI plus 0.75 equivalent weight of polyester with equivalent weight of 280, plus 0.25 equivalent weight polyether, with an equivalent weight of 960. 3.0 excess TDI was used. The polyester was propylene fumarate and the polyether as diol.

6. TDI plus 0.75 equivalent weight of polyoxypropylene glycol triol, with an equivalent weight of 1,000, plus 0.25 equivalent weight hydroxy ethyl acrylate. 2.5 excess TDI was used. The hydroxy ethyl acrylate had an equivalent weight of 116.

7. TDI plus 0.75 equivalent weight of polyoxypropylene glycol (same as in No. 6) plus 0.25 equivalent weight sorbitol. Exess TDI was 3.0.

Exemplary phosphine oxides within the ambit of the formula aforesaid include:

$$(HOCH_2CH_2CH_2)_3PO$$

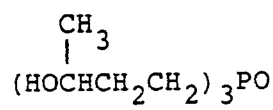

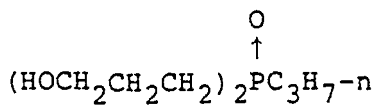

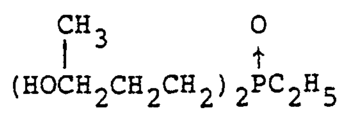

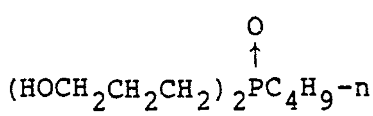

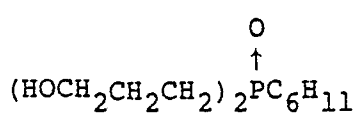

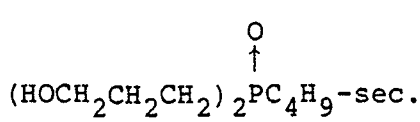

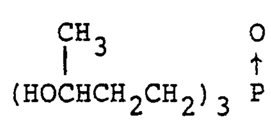

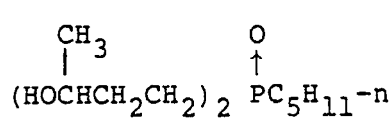

Polyhydroxyalkylphosphine oxides are a known class of chemical compounds which are described in the technical literature. They may be prepared by first forming the intermediate phosphine by reacting an

excess of an olefinic compound with a phosphine compound in the presence of a free radical catalyst. The phosphine adduct is then contacted with an oxidizing agent such as hydrogen peroxide to give the phosphine oxide. Generally speaking, polyhydroxyalkylphosphine oxides are hydrolytically very stable.

The polyurethane adhesive systems aforesaid can be realized by including as part of the low molecular weight dihydroxy curative, a polyhydroxyalkylphosphine oxide of the formula:

$$(HO{-}R)_n\overset{O}{\overset{\uparrow}{P}}(R_1)_{3-n}$$

wherein R is alkylene of 3 to 6 carbom atoms, $R_1$ is an alkyl of 2 to 10 carbon atoms or cycloalkyl of 6 to 12 carbon atoms and n is an integer of 2 or 3.

Exemplary phosphine oxides within the ambit of the formula aforesaid include:

$$(HOCH_2CH_2CH_2)_3PO$$

$$(HO\overset{CH_3}{\overset{|}{C}}HCH_2CH_2)_3PO$$

$$(HOCH_2CH_2CH_2)_2\overset{O}{\overset{\uparrow}{P}}C_3H_7\text{-n}$$

$$(HO\overset{CH_3}{\overset{|}{C}}H_2CH_2CH_2)_2\overset{O}{\overset{\uparrow}{P}}C_2H_5$$

$$(HOCH_2CH_2CH_2)_2\overset{O}{\overset{\uparrow}{P}}C_4H_9\text{-n}$$

$$(HOCH_2CH_2CH_2)_2\overset{O}{\overset{\uparrow}{P}}C_4H_9\text{-sec.}$$

$$(HOCH_2CH_2CH_2)_2\overset{O}{\overset{\uparrow}{P}}C_6H_{11}$$

$$(HO\overset{CH_3}{\overset{|}{C}}HCH_2CH_2)_3\overset{O}{\overset{\uparrow}{P}}$$

$$(HO\overset{CH_3}{\overset{|}{C}}HCH_2CH_2)_2\overset{O}{\overset{\uparrow}{P}}C_5H_{11}\text{-n}$$

In preparing the polyurethane adhesive compositions by the process of the invention, an NCO terminated prepolymer is mixed with a low molecular weight, aliphatic polyhydroxy curative compound in the normal manner of preparing a polyurethane curable adhesive composition except that there is included therewith a quantity of a polyhydroxyalkylphosphine oxide aforesaid and the mixture placed between support plates and allowed to cure. Normally, curing is facilitated by heating at about 200°C. The plates are pressed together during curing; pressure does not usually exceed about 100 $lbs/m^2$ (45.4 $Kg/m^2$). After curing for about one hour, the adhesive joint is conditioned at room temperature for about 24 hours.

So far as can be ascertained, the extent of improved bonding of the cured adhesive depends on the quantity of polyhydroxyalkylphosphine oxide in the polyurethane curable adhesive formulation. Generally speaking, the polyhydroxyalkylphosphine oxide will run about 10% to about 60% by weight of the total hydroxy curing system. Moreover, the combination of an aliphatic diol and trihydroxyalkylphosphine oxide has superior adhesion compared with the prior art aliphatic diol/triol combination such as the commercial mixture of 1,4-butanediol (BD) and trimethylolpropane (TMP).

The polyurethane curable adhesive compositions obtainable by the invention are particularly useful and valuable in that on curing they bond extremely well to aluminum. In some instances, bonding to aluminum was practically the same as on steel. This is unusual and unexpected as good adhesion to aluminum surfaces is recognized in the adhesive art as often being a problem.

It has now been discovered that the enumerated desiderate aforesaid can be realized to a marked degree from heat curable NCO prepolymer/hydroxy curative composition in which at least part of the hydroxy curative is a polyhydroxyalkylphosphine oxide and the provision of said heat curable composition and the heat cured polyurethane coating produced therefrom constitutes the principal object and purpose of the invention.

In carrying out the invention, polyurethane coatings are preferably produced in the known manner of using and formulating ASTM Type III urethanes by applying to a substrate a mixture of a blocked NCO prepolyer and a hydroxy curative containing a trishydroxyalkylphosphine oxide, and the so-treated substrate baked to drive off the blocking agent and promote curing. In the case of phenolic blocked urethane prepolymer, baking is usually effected at temperatures around 350°C.

Blocked urethanes are well-known chemical entities, the description and preparation of which are extensively documented in the patent and technical literature. Generally, an NCO prepolymer is first prepared by reacting excess diisocyanate with a hydrogen donor, for example, polyether or polyester polyol, until maximum reaction is reached as indicated by the desired available NCO percentage after which the blocking agent is introduced to completely block the remaining NCO. To insure complete stability, most formulations include 1 to 2% excess blocking agents. To the blocked prepolymer is then added the equivalent amount of hydrogen donor, for example, amine or polyhydroxy compound to give the heat curable, blocked NCO prepolymer composition. For further details on blocked urethanes and their use in coating formulations, reference is made to the well-known treatise, "The Development and Use of Polyurethane Products" by E. N. Doyle published by McGraw-Hill, Inc. (1971).

Urethane based coatings may be employed using conventional plant procedures such as dipping, electrostatic spray, corona electric spray, airless spray, flow or curtain coating and other known techniques.

Reference is now made to the following examples and procedures.

## Examples of Polyurethane Elastomer Compositions

### Example 1

To 127.5 g of Vibrathane 8011® (a diisocyanate terminated prepolymer of TDI and a polyester polyol; %NCO = 3.3, equivalent weight = 127.5, sold by Uniroyal), was added 10 g of xylene and the mixture heated to 85°C and degassed. The so-treated prepolymer was then reacted with 10.5 g of a mixture consisting by weight of 15% tris(3-hydroxypropyl) phosphine oxide (THPPO) and 85% sec. butyl bis(3-hydroxypropyl) phosphine oxide (BHPPO). The mixture was poured onto a metal sheet previously treated with a silicon release agent and then degassed under vacuum. The cast sheet was post cured for 24 hours at 110°C.

### Example 2

An NCO prepolymer was prepared by adding in portions 2 moles of melted MDI (4,4'-diphenylmethane diisocyanate) to 1 mole of Polymeg 1000, previously degassed and dried overnight at 90°C at 1 mm Hg. Polymeg is a difunctional polyether having an equivalent weight of 502.2 and sold by BASF/Wyandotte. After the addition, the reagents were allowed to react for one hour at no higher temperature than about 80°C. The resulting prepolymer was kept under dry $N_2$ until ready for use.

The prepolymer aforesaid was mixed at room temperature with sec. butyl bis(hydroxypropyl) phosphine oxide at an NCO/OH ratio of 1.05 in the presence of dibutyltin dilaurate as a catalyst. The blended components were poured into a preheated mold at 100°C and held for one hour under 5000 lb force and then posted cured in an oven at 120°C overnight. The resulting elastomer was conditioned in a desiccator for one week prior to testing.

### Prior Art
### MOCA

The procedure of Example 1 was repeated using 13 g; (95% of stoichiometric) of MOCA 4,4'-methylenebis(2-chloroaniline) as the curative.

### Prior Art
### TMP/BD

The procedure of Example 1 was repeated using, as the curative, 4.27 g of a mixture of 6% TMP (trimethylolpropane) and 94% BD (1,4-butanediol).

Elastomer Test Procedures

The polyurethane elastomers of the examples were evaluated using the following standard test procedures:

a. Shore hardness — ASTM D—2240—75.

Three pieces of elastomer slabs were compiled and the hardness measured by Durometer D.

b. Stress-Strain Properties — ASTM D—412—75.

The tensile modulus, tensile strength at break and ultimate elongation were measured by Instron Table Model 1130 at room temperature.

The test results of the examples are summarized in Table I.

Examples of Polyurethane Adhesive Compositions

An NCO terminated prepolymer was prepared by adding in portions 2 moles of melted MDI (4,4'-diphenylmethane diisocyanate) to 1 mole of Polymeg 1000, previously degassed and dried overnight at 90°C at 1 mm Hg. Polymeg is a difunctional polyether having an equivalent weight of 502.2 and sold by BASF. After the addition, the reagents were allowed to react for one hour at no higher temperature than about 80°C. The resulting prepolymer was kept under dry $N_2$ until ready for use.

A curable adhesive composition was prepared by mixing the prepolymer aforesaid with a polyhydroxyalkylphosphine oxide curative of the invention in the presence of dibutyltin dilaurate as a catalyst. The thoroughly blended mixture was spread on the surface of 0.5" × 1" degreased metal strips by means of a spatula. Another metal strip was placed with its clean side in contact with the coating. The resulting assembly was inserted in a press, clamped under pressure of not more than about 100 $lbs/m^2$ (45.4 $Kg/m^2$) and heated at 200°C for one hour and then allowed to condition at room temperature for 24 hours.

Using the procedure aforesaid, various adhesive formulations of the prepolymers and curative were prepared and tested. These examples and the shear strength data are set forth in Table I.

Testing of Adhesives

Lap-Shear Strength ASTM—D—3164

a. Testing machine was adjusted in such a way that breaking load for the specimens fell between 15%—85% of full scale.

b. A rate of loading (8.27—9.65 KPa/min) was applied.

c. Speed of crosshead = 0.05 in/min.

Failing stress was calculated as

$$\frac{\text{pounds—force}}{\text{in}^2\text{-area}}$$

Turning to Table II, it will be observed that where 1,4-butanediol (BD) is used in combination with BHPPO alone or with THPPO, Examples 4, 5, 6, 9 and 10, excellent adhesion to steel and aluminum was achieved. With higher amounts of BHPPO, adhesion increased; Examples 4, 5 and 6. Improved adhesion likewise resulted with increased amounts of THPPO. The best adhesion resulted when both BHPPO and THPPO were both used in the curative system.

Example 10 is particularly noteworthy in that the adhesion to aluminum was excellent, virtually as good as to steel.

Example 11, the THPPO triol of the invention was replaced with the prior art control TMP triol. The adhesion to aluminum dropped to 2011.0 kPa. compared with 373.4 kPa of Example 9 containing THPPO triol.

The prior art with BD and TMP compositions a. and b. give lower shear strengths than were obtained with the polyhydroxyalkylphosphine oxide curatives of the invention.

Examples of Polyurethane Coating Compositions

| Identification Hydroxyl Components | Chemical Composition | Mol. Wt. | Eq. Wt. | Supplier |
|---|---|---|---|---|
| THPPO | Tris(3-hydroxypropyl) phosphine oxide | 224.0 | 74.66 | FMC Corp. |
| Desmophen 650 | Hydroxy terminated polyester resin | | 215.00 | Mobay Chem. |
| Crelan U—502 | Hydroxy terminated polyester resin | | 1133.30 | Mobay Chem. |
| Epoxy Resin Epon 1001 | Epoxy-hydroxy terminated resin | 1000.0 | 500.00 | Shell |
| Trimethylol propane | Trifunctional hydroxyl compound | 134.0 | 44.60 | |
| **Isocyanate Components** | | | | |
| Crelan Hardener U-T m.temp. 60°C | Blocked aromatic diisocyanate adduct | 672.0 | 336.0 | Mobay Chem. |
| Crelan Hardener U—I | Blocked aliphatic diisocyanate adduct | 730.4 | 365.2 | Mobay Chem. |
| **Other Components** | | | | |
| Catalyst T—12 (DBTDL) | Dibutyltin dilaurate | | | M&T Chem. Inc. |
| Modaflow-flow agent | | | | Mon-santo |
| Silicone fluid L—522-flow agent | | | | Union Carbide |
| MEK Solvent | Methylethylketone | | | |

The examples of the invention and the prior art were formulated using one of the following mixing procedures.

Mixing Procedures

A. Dibutyltin dilaurate (BDTDL) catalyst is dissolved in methylethylketone (MEK) and the solution sprayed over a pulverized blend of the NCO and OH components. The solvent is removed after which the solidified residue is ground in a ball mill for 24 hours. A solids fraction passing through a 150 mesh sieve was collected and the powder sprayed on grounded metal panels with an electrostatic spray gun and the resulting layer baked at 200°C.

B. The OH components, DBTDL catalyst and flow agent are mixed and melted to give a homogeneous blend. After solidifying, the blend is crushed and mixed with the NCO component. The solids are transferred to a ball mill and ground for 24 hours. A fraction passing a 150 mash sieve was sprayed with an electrostatic spray gun on grounded metal panels which were baked at 200°C.

C. The catalyst (DBTDL), flow agent, pulverized NCO and OH components are melted together at 90°C and mixed until a homogeneous blend is obtained. On cooling to room temperature, the solidified mass is crushed and ground in a ball mill for 48 hours. A portion passing through a 150 mesh sieve is collected. This fraction is sprayed on grounded metal panels with an electrostatic spray gun and baked at 200°C.

D. Dibutyltin dilaurate (DBTDL) catalyst, OH and NCO components and modaflow-flow agent are

mixed at room temperature in a blender for 2 minutes. The solids are then crushed and ground in a glass bowl by hand for 10 to 20 minutes. The ground powders are sifted through a 150 mesh sieve and the sifted portion sprayed on grounded metal panels with an electrostatic spray gun and the resulting coating baked at 200°C.

Coating Test Procedures

1. *Appearance* of powder is observed visually determining smoothness of low, orange peel on the surface, etc.

2. *Mar-proofness* is determined by just scraping under pressure with a reverse nail over the surface of the film. If no residual scraping mark was left, the film is considered to be mar-proof.

3. *Discoloration* after baking is determined visually.

4. *Solvent Resistance, ASTM D 2792—60.* Small cotton balls are placed on the coated panel and were soaked with a solvent. The films are checked every hour for softening, swelling, blistering and solubility.

5. *Impact Strength.* Impact test is run on Bonderite 37 steel panels according to ASTM D 2794—69. A Gardner impact test is used containing a 4 lb steel rod, ½" diameter male punch and 9/16" diameter die.

6. *Sward Hardness.* The Sward hardness is measured with a Sward rocker on glass panels, according to ASTM D 1684.

Example 11*

| NCO Component | Equivalents of NCO or OH | Parts by Weight | Equiv. % in OH Comp. |
|---|---|---|---|
| Aromatic blocked diisocyanate, Crelan Hardener U—T | 1.05 | 100.0 | |
| Hydroxyl Component | | | |
| THPPO | 0.64 | 14.0 | 64.0 |
| Desmophen 650 | 0.23 | 14.0 | 23.0 |
| Epoxy Resin 1001 | 0.13 | 21.5 | 13.0 |
| | | | 100.00 |
| Other Additives | | | |
| T-12, catalyst DBTDL | | 00.7 | |
| Modaflow-flow agent | | 2.0 | |
| MEK | | 40.0 | |

Curing Conditions

Baking Temp. & Time:
200°C, 6 min.

Testing Results

1. Appearance of Film:
   a. Flow: good
   b. Mar-proofness: good
2. Discoloration After Baking: yellowing
3. Solvent Resistance:
   a. Toluene: no effect
   b. Isopropanol: no effect
4. Impact Strength

| | Joule | In/lb |
|---|---|---|
| a. Direct: | 5.2 | 46 |
| b. Reverse: | 2.9 | 26 |

5. Sward Hardness: 44

*Mixing procedure A was followed

Example 12*

| NCO Component | Equivalents of NCO or OH | Parts by Weight | Equiv. % in OH Comp. |
|---|---|---|---|
| Aliphatic blocked diisocyanate, Crelan Hardener U—I | 1.05 | 100.00 | |
| Hydroxyl Components | | | |
| THPPO | 0.64 | 12.83 | 64.0 |
| Desmophen 650 | 0.23 | 12.83 | 23.0 |
| Epoxy Resin 1001 | 0.13 | 17.12 | 13.0 |
| | | | 100.0 |
| Other Additives | | | |
| T—12, catalyst DBTDL | | 0.75 | |
| Modaflow-flow agent | | 2.00 | |
| MEK | | 40.00 | |

Curing Conditions

Baking Temp. & Time:
200°C, 10 min.

Testing Results

1. Appearance of Film:
   a. Flow: good
   b. Mar-proofness: good
2. Discoloration After Baking:
   Does not discolor
3. Solvent Resistance:
   a. Toluene: no effect
   b. Isopropanol: no effect
   c. Ethyl Acetate: no effect
4. Impact Strength

| | Joule | In/lb |
|---|---|---|
| a. Direct: | 8.6 | 76 |
| b. Reverse: | 5.2 | 46 |

5. Sward Hardness: 42

*Mixing procedure A was followed

Example 13*

| NCO Component | Equivalents of NCO or OH | Parts by Weight | Equiv. % in OH Comp. |
|---|---|---|---|
| Aliphatic blocked diisocyanate, Crelan Hardener U—I | 1.05 | 100.0 | |
| Hydroxyl Component | | | |
| THPPO | 0.70 | 14.0 | 70.0 |
| Desmophen 650 | 0.25 | 14.0 | 25.0 |
| Epoxy Resin 1001 | 0.05 | 7.0 | 5.0 |
| | | | 100.0 |

| NCO Component | Equivalents of NCO or OH | Parts by Weight | Equiv. % in OH Comp. |
|---|---|---|---|
| Other Additives | | | |
| T—12, catalyst BDTDL | | 0.5 | |
| Modaflow-flow agent | | 1.50 | |

Curing Conditions

Baking Temp. & Time:
200°C, 15 min.

Testing Results

1. Appearance of Film:
   a. Flow: good
   b. Mar-proofness: good
2. Discoloration After Baking:
   Does not discolor
3. Solvent Resistance:
   a. Toluene: no effect
   b. Isopropanol: no effect
   c. Ethyl Acetate: no effect
4. Impact Strength:

| | Joule | In/lb |
|---|---|---|
| a. Direct: | 6.8 | 60 |
| b. Reverse: | 3.4 | 30 |

5. Sward Hardness: 50

*Mixing Procedure B was followed

Example 14*

| NCO Component | Equivalents of NCO or OH | Parts by Weight | Equiv. % in OH Comp. |
|---|---|---|---|
| Aliphatic blocked diisocyanate, Crelan Hardener U—I | 1.050 | 100.00 | |
| Hydroxyl Component | | | |
| THPPO | 0.775 | 17.03 | 77.5 |
| Desmophen 650 | 0.175 | 10.22 | 17.5 |
| Epoxy Resin 1001 | 0.050 | 6.81 | 5.0 |
| | | | 100.0 |
| Other Additives | | | |
| T—12, catalyst | | 0.50 | |
| Modaflow-flow agent | | 2.00 | |

Curing Conditions

Baking Temp. & Time:
200°C, 10 min.

Testing Results

1. Appearance of Film:
   a. Flow: good
   b. Mar-proofness: good
2. Solvent Resistance:
   a. Toluene: no effect
   b. Isopropanol: no effect
   c. Ethyl Acetate: no effect
3. Impact Strength:

| | | |
|---|---|---|
| a. Direct: | 11.3 | 100 |
| b. Reverse: | 9.0 | 80 |

4. Sward Hardness: 64

*Mixing procedure C was followed

In following Examples 15—17 and prior art formulations (a) and (b) mixing procedure (D) was used.

Example 15

| NCO Component | Equivalents of NCO or OH | Parts by Weight |
|---|---|---|
| Aliphatic blocked diisocyanate, Crelan Hardener, U—I | 1.05 | 25.56 |
| Hydroxyl Component | | |
| THPPO | 0.50 | 2.56 |
| Crelan U—502 | 0.40 | 30.42 |
| Epoxy Resin 1001 | 0.10 | 3.33 |
| Other Additives | | |
| T—12, catalyst DBTDL | | 0.15 |
| Modaflow-flow agent | | 0.28 (0.8%) |

Curing Conditions

Baking Temp and Time:
200°C, 10 min.

Testing Results

1. Appearance of Film:
   a. Flow: good
   b. Mar-proofness: good
2. Discoloration After Baking:
   Does not discolor
3. Impact Strength:

| | Joule | In/lb |
|---|---|---|
| a. Direct: | 18.1 | 160 |
| b. Reverse: | 18.1 | 160 |

4. Sward Hardness: 36
5. Solvent Resistance:

| Solvent | Time (Hr.) | 1 | 2 | 3 | 4 | 5 | 6 | 7 |
|---|---|---|---|---|---|---|---|---|
| Toluene | | Soft | Soft | Soft | Soft | Soft | Soft | Soft |
| Isopropanol | | No Effect | No | No | No | No | No | Soft |
| Ethyl Acetate | | Soft | Blistering | | | | | |

In the following Examples 16—17, mixing procedure D was followed.

Example 16

| NCO Component | Equivalents of NCO or OH | Parts by Weight |
|---|---|---|
| Aliphatic blocked diisocyanate Crelan Hardener, U—I | 1.05 | 50.00 |
| Hydroxyl Component | | |
| THPPO | 0.7500 | 7.81 |
| Crelan U—502 | 0.1875 | 27.70 |
| Epoxy Resin 1001 | 0.0625 | 4.07 |
| Other Additives | | |
| T—12, catalyst DBTDL | | 0.375 |
| Modaflow-flow agent | | 1.000 (2.5%) |

Curing Conditions

Baking Temp. and Time:
200°C, 10 min.

Testing Results

1. Appearance of Film:
   a. Flow: good
   b. Mar-proofness: good
2. Discoloration After Baking:
   Does not discolour
3. Impact Strength:

| | Joule | In/lb |
|---|---|---|
| a. Direct: | 13.6 | 120 |
| b. Reverse: | 5.6 | 50 |

4. Sward Hardness: 38
5. Solvent Resistance:

| Solvent | Time (Hr.) | 1 | 2 | 3 | 4 | 5 | 6 | 7 |
|---|---|---|---|---|---|---|---|---|
| Toluene | | No Effect | No | Soft | S | S | S | S |
| Isopropanol | | No | No | No | No | No | No | No |
| Ethyl Acetate | | Soft Blistering | | | | | | |

Example 17

| NCO Components | Equivalents of NCO or OH | Parts by Weight |
|---|---|---|
| Aliphatic blocked diisocyanate Crelan Hardener, U—I | 1.05 | 30.00 |
| **Hydroxyl Component** | | |
| THPPO | 1.00 | 6.01 |
| **Other Additives** | | |
| T—12, catalyst DBTDL | | 0.225 |
| Modaflow-flow agent | | 0.60 (10.0%) |

Curing Conditions

Baking Temp. and Time:
200°C, 10 min

Testing Results

1. Appearance of Film:
   a. Flow: good
   b. Mar-proofness: good
2. Discoloration After Baking:
   Does not discolor
3. Impact Strength:

| | Joule | In/lb |
|---|---|---|
| a. Direct: | 5.6 | 50 |
| b. Reverse: | 1.7 | 15 |

4. Sward Hardness: 36
5. Solvent Resistance:

| Solvent | Time (Hr.) 1 | 2 | 3 | 4 | 5 | 6 | 7 |
|---|---|---|---|---|---|---|---|
| Toluene | No | No | No | Soft | S | S | S |
| Isopropanol | No | No | No | Soft | S | S | S |
| Ethyl Acetate | Soft | S | S | S | S | S | S |

Prior Art (a)

| NCO Component | Equivalent of NCO or OH | Parts by Weight |
|---|---|---|
| Aliphatic blocked diisocyanate Crelan Hardener, U—I | 1.05 | 20.00 |
| Crelan U—502 | 0.80 | 47.28 |
| Epoxy Resin 1001 | 0.20 | 5.22 |

| | Equivalents of NCO or OH | Parts by Weight |
|---|---|---|
| Other Additives | | |
| T—12, catalyst DBTDL | | 0.15 |
| Modaflow-flow agent | | 0.40 (0.8%) |

Curing Conditions

Baking Temp. and Time: 200°C, 12 min

Testing Results

1. Appearance of Film:
   a. Flow: good
   b. Mar-proofness: good
2. Discoloration After Baking: Does not discolor
3. Impact Strength:

| | Joule | In/lb |
|---|---|---|
| a. Direct: | 18.1 | 160 |
| b. Reverse: | 18.1 | 160 |

4. Sward Hardness: 38
5. Solvent Resistance:

| Solvent | Time (Hr.) 1 | 2 | 3 | 4 | 5 | 6 | 7 |
|---|---|---|---|---|---|---|---|
| Toluene | No Effect | Soft | S | S | S | S | S |
| Isopropanol | No | No | No | No | No | No | No |
| Ethyl Acetate | Soft | Blistering | | | | | |

Prior Art (b)

| NCO Component | Equivalents of NCO or OH | Parts by Weight |
|---|---|---|
| Aliphatic blocked diisocyanate Crelan Hardener, U—I | 1.05 | 50.000 |
| Hydroxyl Component | | |
| Trimethylolpropane, | 0.80 | 4.653 |
| TMP Crelan, U—502 | 0.20 | 29.554 |
| Other Additives | | |
| T—12, catalyst DBTDL | | 0.375 |
| Modaflow-flow agent | | 0.630 (1.8%) |

Curing Conditions

Baking Temp. and Time: 200°C, 12 min

Testing Results

1. Appearance of Film:
   a. Flow: good
   b. Mar-proofness: good
2. Discoloration After Baking:
   Does not discolor
3. Impact Strength:

| | Joule | In/lb |
|---|---|---|
| a. Direct: | 9.0 | 80 |
| b. Reverse: | 5.6 | 50 |

4. Sward Hardness: 38
5. Solvent Resistance:

| Solvent | Time (Hr.) 1 | 2 | 3 |
|---|---|---|---|
| Toluene | Soft | Dissolving | D |
| Isopropanol | Soft | Dissolving | D |
| Ethyl Acetate | Soft | Blistering | D |

TABLE I

Elastomer Properties

| Example | Hardness Shore A | Tensile MPa | Elongation -%- | Modulus kPa |
|---|---|---|---|---|
| 1 | 50 | 17.24[b] | 700 | ------ |
| 2 | 33 | 3.33 | 640.63 | 806.4 (100%) |
| | | | | 1108.8 (200%) |
| | | | | 1411.2 (300%) |
| PRIOR ART | | | | |
| MOCA | 80 | 6260 | 393 | ------ |
| TMP/BD 6%/94% | 48 | 523[a] | 714 | ------ |

[a] Jaw break
[b] Sample pulled out of jaws

TABLE II

| Example | Formulation | Steel Strip | Aluminum Strip |
|---|---|---|---|
| 3 | (1,4BD, eq. wt. 80% + BHPPO by eq. wt. 20%) | | |
| | polyurethane prepolymer, g | 5.00 | 5.00 |
| | 1,4BD, g | 0.25 | 0.25 |
| | BHPPO, g | 0.06 | 0.06 |
| | NCO/OH | 1.10 | 1.10 |
| | Lap Shear, strength, kPa | 4309.2 | 3519.1 |
| 4 | (1,4BD by eq. wt. 60% + BHPPO by eq. wt. 40%) | | |
| | polyurethane, prepolymer, g | 5.00 | 5.00 |
| | 1,4BD, g | 0.22 | 0.22 |
| | BHPPO, g | 0.15 | 0.15 |
| | NCO/OH | 1.10 | 1.10 |
| | Lap Shear, strength, kPa | 4757.4 | 4550.5 |
| 5 | (1,4BD by eq. wt. 40% + BHPPO by eq. wt. 60%) | | |
| | polyurethane prepolymer, g | 5.00 | 5.00 |
| | 1,4BD, g | 0.17 | 0.17 |
| | BHPPO, g | 0.26 | 0.26 |
| | NCO/OH | 1.10 | 1.10 |
| | Lap Shear, strength, kPa | 5458.3 | 5171.1 |
| 6 | (1,4BD by eq. wt. 90% + THPPO by eq. wt. 10%) | | |
| | polyurethane prepolymer, g | 5.00 | 5.00 |
| | 1,4BD, g | 0.26 | 0.26 |
| | BHPPO, g | 0.03 | 0.03 |
| | NCO/OH | 1.10 | 1.10 |
| | Lap Shear, strength, kPa | 3171.6 | 1578.9 |
| 7 | (1,4BD by eq. wt. 80% + THPPO by eq. wt. 20%) | | |
| | polyurethane, prepolymer, g | 5.00 | 5.00 |
| | 1,4BD, g | 0.24 | 0.24 |
| | THPPO, g | 0.06 | 0.06 |
| | NCO/OH | 1.10 | 1.10 |
| | Lap Shear, strength, kPa | 4688.4 | 4274.7 |

TABLE II (continued)

| Example | Formulation | Steel Strip | Aluminum Strip |
|---|---|---|---|
| 8 | (1,4BD by eq. wt. 70% + BHPPO by eq. wt. 20% + THPPO by eq. wt. 10%) | | |
| | polyurethane prepolymer, g | 5.00 | 5.00 |
| | 1,4BD, g | 0.22 | 0.22 |
| | BHPPO, g | 0.06 | 0.06 |
| | THPPO, g | 0.03 | 0.03 |
| | NCO/OH | 1.10 | 1.10 |
| | Lap Shear, strength, kPa | 5108.9 | 3734.6 |
| 9 | (1,4BD by eq. wt. 60% + BHPPO by eq. wt. 20% + THPPO by eq. wt. 20%) | | |
| | polyurethane prepolymer, g | 5.00 | 5.00 |
| | 1,4BD, g | 0.20 | 0.20 |
| | BHPPO, g | 0.07 | 0.07 |
| | THPPO, g | 0.07 | 0.07 |
| | NCO/OH | 1.10 | 1.10 |
| | Lap Shear, strength, kPa | 5309.9 | 5102.1 |
| 10 | (1,4BD by eq. wt. 70% + BHPPO by eq. wt. 20% + TMP by eq. wt. 10%) | | |
| | polyurethane prepolymer, g | 5.00 | 5.00 |
| | 1,4BD, g | 0.21 | 0.21 |
| | BHPPO, g | 0.06 | 0.06 |
| | TMP, g | 0.03 | 0.03 |
| | NCO/OH | 1.10 | 1.10 |
| | Lap Shear, strength, kPa | 3874.8 | 2011.2 |

TABLE II (continued)

PRIOR ART

| | | | |
|---|---|---|---|
| a | (1,4BD, eq. wt. 100%) | | |
| | polyurethane prepolymer, g | 5.00 | 5.00 |
| | 1,4BD, g | 0.27 | 0.27 |
| | NCO/OH | 1.10 | 1.10 |
| | Lap Shear, strength, kPa | 3016.5 | 2011.2 |
| b | (1,4BD by eq. wt. 90% + TMP by eq. wt. 10%) | | |
| | polyurethane prepolymer, g | 5.00 | 5.00 |
| | 1,4BD, g | 0.24 | 0.24 |
| | TMP, g | 0.03 | 0.03 |
| | NCO/OH | 1.10 | 1.10 |
| | Lap Shear, strength, kPa | 2011.0 | 1436.5 |

BD = 1,4-butanediol

TMP = trimethylolpropane

THPPO = tris(3-hydroxypropyl) phosphine oxide

BHPPO = sec. butyl bis(3-hydroxypropyl) phosphine oxide

## Claims

1. A process for preparing polyurethane products characterized in that a NCO terminated urethane prepolymer is cured by means of a curative which contains a polyhydroxyalkyl phosphine oxide of the formula

$$(HO\text{—}R)_n\overset{\overset{\displaystyle O}{\uparrow}}{P}(R_1)_{(3-n)}$$

wherein R is alkylene of 3 to 6 carbon atoms, $R_1$ is alkyl of 2 to 10 carbon atoms or cycloalkyl of 6 to 12 carbon atoms and n is an integer of 2 to 3, wherein

A) an NCO terminated elastomer prepolymer formed from a polyol selected from the class consisting of polyhydroxy functional polyethers and polyesters is cured with a curative containing the above defined polyhydroxyalkyl phosphine oxide, wherein a polyurethane elastomer is prepared, or

B) an NCO terminated urethane prepolymer from a polyol selected from the class consisting of polyhydroxy functional polyethers and polyesters is cured with a polyhydroxy aliphatic curative system in which system from about 10% to about 60% based on the weight of the curative system of a polyhydroxyalkyl phosphine oxide is incorporated whereby a cured polyurethane adhesive is prepared, or

C) a blocked urethane NCO prepolymer is heat cured together with a hydroxy curative at least a part of which is a polyhydroxyalkyl phosphine oxide as defined above, whereby a cured polyurethane coating is obtained.

2. A process according to claim 1, wherein in A) the NCO terminated prepolymer has been formed by reacting the polyol with toluene diisocyanate.

3. A process according to claim 1, wherein in A) the NCO terminated prepolymer has been formed by reacting the polyol with 4,4'-diphenylmethanediisocyanate.

4. A process according to claim 1, wherein in A) the poly- hydroxyalkyl phosphine oxide curative used is the compound:

$$(HOCH_2CH_2CH_2)_2\overset{\overset{\displaystyle O}{\uparrow}}{P}\text{—}C_4H_9\text{-sec.}$$

5. A process according to claim 1, wherein in A) the curative is a mixture of a major amount of:

$$\begin{array}{c} O \\ \uparrow \\ (HOCH_2CH_2CH_2)_2P—C_4H_9\text{-sec.} \end{array}$$

and a minor amount of:

$$\begin{array}{c} O \\ \uparrow \\ (HOCH_2CH_2CH_2)_3P. \end{array}$$

6. A process according to claim 1, wherein in A) the curative is the compound:

$$\begin{array}{c} O \\ \uparrow \\ (HOCH_2CH_2CH_2)_3P. \end{array}$$

7. A process according to claim 1, wherein in C) the poly- hydroxyalkyl phosphine oxide is tris(3-hydroxypropyl)-phosphine oxide.

8. A process according to claim 1, wherein in B) the phosphine oxide is:

$$\begin{array}{c} O \\ \uparrow \\ (HOCH_2CH_2CH_2)_2P—C_4H_9\text{-sec.} \end{array}$$

9. A process according to claim 1, wherein in B) the phosphine oxide is:

$$(HOCH_2CH_2CH_2)_3PO.$$

**Patentansprüche**

1. Verfahren zur Herstellung von Polyurethanprodukten, dadurch gekennzeichnet, daß ein Urethanvorpolymer mit endständigem NCO mittels eines Härtungsmittels ausgehärtet wird, das ein Polyhydroxyalkylphosphinoxid der Formel

$$\begin{array}{c} O \\ \uparrow \\ (HO—R)_nP(R_1)_{(3-n)} \end{array}$$

enthält, worin R Alkylen mit 3 bis 6 Kohlenstoffatomen ist, $R_1$ Alkyl mit 2 bis 10 Kohlenstoffatomen oder Cycloalkyl mit 6 bis 12 Kohlenstoffatomen ist und n eine ganze Zahl von 2 bis 3 ist, worin

A) ein Elastomervorpolymer mit endständigem NCO, gebildet, aus einem Polyol, ausgewählt aus der funktionellen Polyhydroxypolyethern und Polyestern bestehenden Klasse, mit einem Härtungsmittel, das das oben definierte Polyhydroxyalkylphosphinoxid enthält, ausgehärtet wird, wodurch ein Polyurethanelastomer hergestellt wird, oder

B) ein Urethanvorpolymer mit endständigem NCO aus einem Polyol, ausfewählt aus der aus funtionellen Polyhydroxypolyethern und Polyestern bestehenden Klasse, mit einem aliphatischen Polyhydroxyhärtungsmittelsystem, in welchem von etwa 10 bis etwa 60%, bezogen auf das Gewicht des Härtungsmittelsystems, eines Polyhydroxyalkylphosphinoxids einverleibt ist, ausgehärtet wird, wodurch ein ausgehärteter Polyurethanklebstoff hergestellt wird, oder

C) ein blockiertes Urethan-NCO-Vorpolymer zusammen mit einem Hydroxyhärtungsmittel, von welchem mindestens ein Teil ein Polyhydroxyalkylphosphinoxid der obigen Definition ist, wärmegehärtet wird, wodurch ein ausgehärterter Polyurethaneüberzug erhalten wird.

2. Verfahren nach Anspruch 1, worin in A) das Vorpolymer mit endständigem NCO durch Umsetzung des Polyols mit Toluoldiisocyanat gebildet worden ist.

3. Verfahren nach Anspruch 1, worin in A) das Vorpolymer mit endständigem NCO durch Umsetzung des Polyols mit 4,4'-Diphenylmethandiisocyanat gebildet worden ist.

4. Verfahren nach Anspruch 1, worin in A) das verwendete Polyhydroxyalkylphosphinoxid-Härtungsmittel die Verbindung

$$\begin{array}{c} O \\ \uparrow \\ (HOCH_2CH_2CH_2)_2P—C_4H_9\text{-sec} \end{array}$$

ist.

5. Verfahren nach Anspruch 1, worin in A) das Härtungsmittel eine Mischung aus einer Hauptmenge von

$$(HOCH_2CH_2CH_2)_2\overset{\overset{O}{\uparrow}}{P}—C_4H_9\text{-sec}$$

und einer geringeren Menge von

$$(HOCH_2CH_2CH_2)_3\overset{\overset{O}{\uparrow}}{P}$$

ist.

6. Verfahren nach Anspruch 1, worin in A) das Härtungsmittel die Verbindung

$$(HOCH_2CH_2CH_2)_3\overset{\overset{O}{\uparrow}}{P}$$

ist.

7. Verfahren nach Anspruch 1, worin in C) das Polyhydroxyalkylphosphinoxid Tris(3-hydroxypropyl)-phosphinoxid ist.

8. Verfahren nach Anspruch 1, worin in B) das Phosphinoxid

$$(HOCH_2CH_2CH_2)_2\overset{\overset{O}{\uparrow}}{P}—C_4H_9\text{-sec}$$

ist.

9. Verfahren nach Anspruch 1, worin in B) das Phosphinoxid

$$(HOCH_2CH_2CH_2)_3PO$$

**Revendications**

1. Procédé de préparation de produits dérivés de polyuréthane, caractérisé en ce qu'on durcit un prépolymère d'uréthane à terminaison NCO à l'aide d'un durcisseur contenant un oxyde de polyhydroxy-alkylphosphine de formule:

$$(HO—R)_n\overset{\overset{O}{\uparrow}}{P}(R_1)_{(3-n)}$$

dans laquelle R représente un groupe alkylène de 3 à 6 atomes de carbone, $R_1$ représente un groupe alkyle de 2 à 10 atomes de carbone ou un groupe cycloalkyle de 6 à 12 atomes de carbone, et n représente un nombre entier égal à 2 ou 3, dans lequel:

A) on durcit un prépolymère d'élastomère à terminaison NCO formé à partir d'un polyol choisi parmi les polyéthers et les polyesters à fonction polyhydroxy, avec un durcisseur comprenant l'oxyde de polyhydroxyalkylphosphine défini ci-dessus, pour obtenir un élastomère de polyuréthane, ou

B) on durcit un prépolymère d'uréthane à terminaison NCO dérivé d'un polyol choisi parmi les polyéthers et les polyesters à fonction polyhydroxy, avec un système durcisseur à base de composé aliphatique polyhydroxylé, dans lequel on incorpore d'environ 10% à 60% par rapport au poids du système durcisseur, d'un oxyde de polyhydroxyalkylphosphine pour obtenir un matériau adhésif durci à base de polyuréthane, ou

C) on durcit à chaud un prépolymère d'uréthane à groupes NCO bloqués, avec un durcisseur hydroxylé dont au moins un partie consiste en un oxyde de polyhydroxyalkylphosphine tel que défini ci-dessus, pour obtenir un revêtement de polyuréthane durci.

2. Procédé selon la revendication 1, dans lequel le prépolymère à terminaison NCO est formé dans l'étape A, en faisant réagir le polyol avec du diisocyanate de toluène.

3. Procédé selon la revendication 1, dans lequel le prépolymère à terminaison NCO est formé dans l'étape A, en faisant réagir le polyol avec du diisocyanate de 4,4'-diphénylméthane.

4. Procédé selon la revendication 1, dans lequel l'oxyde de polyhydroxyalkylphosphine utilisé, est le composé de formule:

$$(HOCH_2CH_2CH_2)_2\overset{\overset{O}{\uparrow}}{P}-C_4H_9\text{-sec.}$$

5. Procédé selon la revendication 1, dans lequel le durcisseur utilisé dans l'étape A, est un mélange principalement à base du composé de formule:

$$(HOCH_2CH_2CH_2)_2\overset{\overset{O}{\uparrow}}{P}-C_4H_9\text{-sec}$$

et comprenant un faible quantité du composé de formule:

$$(HOCH_2CH_2CH_2)_3\overset{\overset{O}{\uparrow}}{P}.$$

6. Procédé selon la revendication 1, dans lequel le durcisseur utilisé dans l'étape A, est le composé de formule:

$$(HOCH_2CH_2CH_2)_3\overset{\overset{O}{\uparrow}}{P}.$$

7. Procédé selon la revendication 1, dans lequel l'oxyde de polyhydroxyalkylphosphine utilisé dans l'étape C, est l'oxyde de tris(3-hydroxypropyl)phosphine.

8. Procédé selon la revendication 1, dans lequel l'oxyde de phosphine utilisé dans l'étape B, est le composé de formule:

$$(HOCH_2CH_2CH_2)_2\overset{\overset{O}{\uparrow}}{P}-C_4H_9\text{-sec.}$$

9. Procédé selon la revendication 1, dans lequel l'oxyde de phosphine utilisé dans l'étape B, est le composé de formule:

$$(HOCH_2CH_2CH_2)_3PO.$$